# EUROPEAN PATENT SPECIFICATION

(11) **EP 2 337 242 B1**
(45) Date of publication and mention of the grant of the patent: **14.05.2014**
(21) Application number: 09306261.0
(22) Date of filing: 18.12.2009
(51) Int. Cl.: H04B 10/58, H04B 10/2575

(54) **A method for transmission of data signals using an analogue radio frequency power amplifier, a transmitting device and a receiving device therefor**
Verfahren zur Übertragung eines Datensignals mithilfe eines Analogfunkfrequenzverstärkers, Übertragungsvorrichtung und Empfangsvorrichtung dafür
Procédé de transmission de signaux de données utilisant un amplificateur d'alimentation de fréquence radio analogique, dispositif de transmission et dispositif de réception correspondants

(43) Date of publication of application: 22.06.2011
(73) Proprietor: Alcatel Lucent, 75007 Paris (FR)
(72) Inventor: Haslach, Christoph, 70178, Stuttgart (DE); Wiegner, Dirk, 71409, Schwaikheim (DE); Templ, Wolfgang, 74372, Sersheim (DE)
(74) Representative: Kleinbub, Oliver

(56) References cited:
- EP-A1- 1 693 974
- CA-A1- 2 362 104
- US-A1- 2004 001 719
- US-A1- 2004 239 416
- US-A1- 2009 232 191

## Description

### Field of the invention

The invention relates to a method for transmission of data signals from a transmitting device to at least one receiving device comprising at least one analogue radio frequency power amplifier for signal amplification, wherein said data signals are transmitted over at least one optical connection from the transmitting device to the at least one receiving device, a transmitting device and a receiving device adapted to perform said method.

### Background

The coverage of a certain service area in a cellular radio network is provided by several radio base stations, which are connected to a core network to serve connections to and from mobile users within the service area. A radio base station contains a baseband unit and at least one antenna unit. In order to increase radio coverage and capacity, modern base stations use several sector antennas.

In order to increase flexibility of the base stations, it is desirable to allow the antennas to be located remote from the baseband unit. This has lead to the development of active antenna systems which are also termed remote antenna heads. Typically, one remote antenna head contains one sector antenna, but there are also systems known, which have remote antenna heads with more than only one sector antenna.

The base stations are preferably connected with the remote antenna heads by means of optical fibers. Conventional radio-over-fiber scenarios involve optical transmission of analogue signals between a base station and a transmitter with an amplifier in a remote antenna head.

An example for the implementation of a radio-over-fiber concept in a cellular radio network using a two-fiber-ring is given in the European patent EP 1553791 B1.

However, the quality of the optical transmission suffers severely from noise, non-linearities, like e.g. chromatic dispersion, and attenuation effects. Additionally, signal transmission over wide distances leads e.g. to high losses. Consequently the technical implementations for radio-over-fiber concepts must involve highly sophisticated optical modulation techniques and signal conditioning.

### Summary

Basically, the optical transmission of analogue radio frequency signals involves high electronic efforts for signal modulation techniques and signal conditioning. Indeed, e.g. the method of intensity modulation and direct detection is straightforward, simple and allows for fairly linear optical transmission properties, but on the other hand it requires costly modulators and modulator drivers in order to meet the requirements for analogue radio frequency transmission. In case double side band modulation is used, chromatic dispersion will result in frequency and length dependent suppression of radio frequency power, which will deteriorate the transmission quality.

In the patent application EP 1 693 974 A1, a method for sending control information indicating a detected level of a signal, said control information being superimposed by ASK modulation on said signal and being sent as a digital optical signal to a receiving unit, is disclosed. It is further disclosed, that in the receiving device, a demodulation on the electrical signal is performed, and the extracted control information is used to control the amplification of the signal.

The object of the invention is thus to propose a cost-effective and fault-tolerant method for optical transmission of signals from a transmitting device to a receiving device.

This object is achieved by a method for transmission of data signals from a transmitting device to at least one receiving device as claimed in claim 1.

The object is furthermore achieved by a transmitting device for transmission of signals to at least one receiving device, as claimed in claim 9.

The object is furthermore achieved by a receiving device for reception of signals sent from a transmitting device, as claimed in claim 11.

In other words, in order to address the above-identified problems, it is thus proposed to transmit the radio signal from the digital part of the base station digitally via an optical connection, as e.g. an optical fibre, to a distributed, even far remotely located, amplification stage, followed by an antenna network and an antenna. Since the signal transmission over the optical connection is done in the digital domain, the usage of a kind of digital amplifier, as e.g. a so-called class S amplifier, a so-called EER amplifier (EER = Envelope Elimination and Restoration), or a so-called LINC amplifier (LINC = Linear Amplification with Nonlinear Components), capable of handling digital input signals, would be preferable. However, despite all the benefits of digital amplifier concepts, most of them are currently not yet mature enough to be implemented in a high performing and reliable manner into products in the short-term to mid-term timeframe.

The basic idea of the invention is thus to transmit the radio signals in a digitally modulated manner over an optical fiber to the distributed amplifier and antenna module, and to perform in the amplifier and antenna module a digital to analog conversion, e.g. simply by a suitable filter in case of delta-sigma modulated signals, so that the radio signal can be fed to an analogue amplification stage.

This idea allows transmitting the radio signal to the amplifier also across wide distances with low loss and low signal quality degradation by means of digital data transmission, and to use analogue amplifier solutions, such as conventional Class-AB, Doherty or Envelope Tracking amplifiers, with most of them already being mature and implemented in products.

Further developments of the invention can be gathered from the dependent claims and the following description.

In the following the invention will be explained further making reference to the attached drawings.

### Brief description of the figures

Fig. 1 schematically shows a cellular communication network with a base station and remote antenna heads in which the invention can be implemented.
Fig. 2 schematically shows a transmitting device comprising a digital modulator linked by an optical connection with a receiving device comprising an analogue radio frequency power amplifier according to the invention.
Fig. 3 schematically shows a transmitting device comprising a digital modulator linked by an optical connection with a receiving device comprising two active antenna elements each comprising an analogue radio frequency power amplifier according to the invention.
Fig. 4 schematically shows a transmitting device comprising a digital modulator linked by an optical connection with a receiving device comprising an analogue radio frequency power amplifier using optical heterodyning according to the invention.
Fig. 5 schematically shows a transmitting device comprising a digital modulator linked by an optical connection with a receiving device comprising two active antenna elements each comprising an analogue radio frequency power amplifier using optical heterodyning according to the invention.

### Description of the embodiments

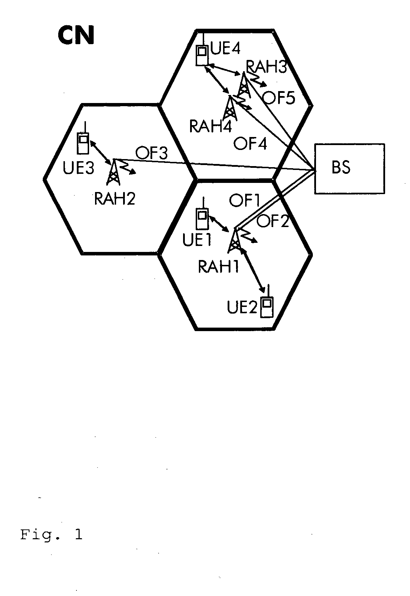

The principle structure of a communication network CN for signal transmission and reception in which the invention can be implemented is shown in fig. 1. The communication network CN comprises a base station BS, remote antenna heads RAH1-RAH4 and user terminals UE1-UE4.

Each of said remote antenna heads RAH1-RAH4 is connected to the base station BS by means of at least one optical connection, as e.g. an optical fiber or an optical free-space connection, OF1, OF2, OF3, OF4 and OF5 respectively. Each of said user terminals UE1-UE4 is connected to one or multiple of said remote antenna heads RAH1-RAH4, which is symbolized by double arrows in fig. 1. The base station BS is in turn connected to a core network, which is not shown in fig. 1 for the sake of simplicity.

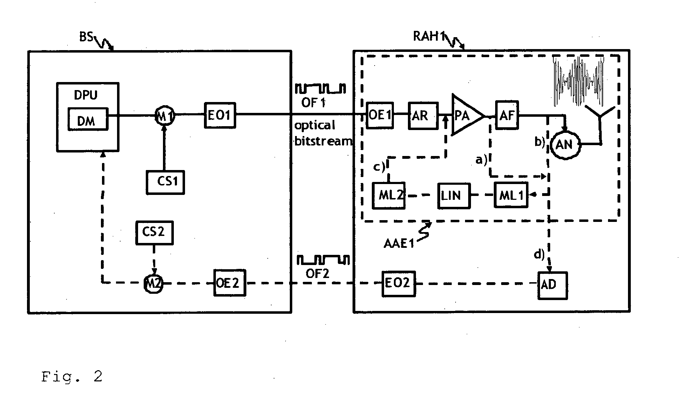

A transmitting device BS, as e.g. a base station, and a receiving device RAH1, as e.g. a remote antenna head, according to an embodiment of the invention is depicted in fig. 2.

The transmitting device BS is indicated as a box and comprises a digital signal processing unit DPU with a digital modulator DM, a first mixer M1, a first carrier synthesizer CS1, and a first electro-optical converter EO1.

The receiving device RAH1 is also indicated as a box and comprises a first opto-electrical converter OE1, an analogue reconstruction device AR, an analogue radio frequency power amplifier PA, an antenna filter AF, and an antenna network AN. Said devices together are part of a so-called active antenna element AAE1, which is indicated by a dashed box.

An output of the digital modulator DM is connected to a first input of the first mixer M1. An output of the first carrier synthesizer CS1 is connected to a second input of the first mixer M1. An output of the first mixer M1 is connected to an input of the first electro-optical converter EO1.

An output of the first electro-optical converter EO1 is connected to an input of the first opto-electrical converter OE1 through an optical connection OF1, as e.g. an optical fiber or an optical free-space connection.

An output of the first opto-electrical converter OE1 is connected to an input of the analogue reconstruction device AR, and an output of the analogue reconstruction device AR is connected to an input of the analogue radio frequency power amplifier PA. An output of the analogue radio frequency power amplifier PA is connected to an input of the antenna filter AF, and an output of the antenna filter is connected to an input of the antenna network AN.

In the digital modulator DM, electrical data signals, as e.g. so-called I and Q data used e.g. in the standard Third Generation Partnership Project Long Term Evolution (3GPP LTE), that the digital modulator DM receives at its input are digitally modulated resulting in electrical digital data signals. The digital modulator can e.g. be a so-called delta sigma modulator or a pulse-length modulator.

Said electrical digital data signals are sent to the first input of the first mixer M1. Electrical radio frequency carrier signals, which can be digital or analogue, are generated in the first carrier synthesizer CS1 and sent to the second input of the first mixer M1. The electrical digital data signals are upconverted by means of the electrical radio frequency carrier signals in the first mixer M1, and sent to the input of the first electro-optical converter EO1.

In the first electro-optical converter EO1, the electrical digital data signals are converted into optical digital data signals, and transmitted to the input of the first opto-electrical converter OE1 located in the receiving device RAH1 via the optical connection OF1, which can be e.g. an optical fiber or an optical free-space connection. Preferably, said first electro-optical converter EO1 comprises a laser diode which is either directly modulated or externally modulated e.g. by means of a electroabsorption or lithiumniobate modulator.

In the first opto-electrical converter OE1, the optical digital data signals are back-converted into electrical digital data signals. Preferably, said opto-electrical converter OE1 comprises a so-called PIN-diode or a so-called avalanche-photo-diode.

From the first opto-electrical converter OE1, the electrical digital data signals are sent to the input of the analogue reconstruction device AR, in which the electrical digital data signals are converted into electrical analogue data signals. Said analogue reconstruction device AR can e.g. be a so-called reconstruction filter in case of delta sigma modulated or pulse width modulated electrical digital data signals.

The electrical analogue data signals are then sent to the input of the analogue radio frequency power amplifier PA for amplification. The amplified electrical analogue data signals are filtered in the antenna filter AF, and sent to the antenna network AN for transmission over an air interface. The antenna filter AF blocks the unwanted spectral fractions, i.e. the out-of-band fractions, of the signal and passes the desired spectral fraction, i.e. the in-band fraction, of the signal to the antenna. Said antenna filter can e.g. be a bandpass filter with suitable frequency characteristic and matching performance.

In the following, two alternative embodiments are described for linearization of the analogue radio frequency power amplifier PA, which are both depicted in fig. 2.

In an embodiment of the invention, the transmitting device BS further comprises a second mixer M2, a second carrier synthesizer CS2, and a second opto-electrical converter OE2, and the receiving device RAH1 further comprises an analogue-to-digital converter AD, and a second electro-optical converter E02.

The embodiment for linearization of the analogue radio frequency power amplifier PA is based on a digitalization of a sample of the amplified electrical analogue data signals followed by a conversion to the optical domain. In a first alternative, which is indicated by a) and d), the electrical analogue data signals are tapped directly after the analogue radio frequency power amplifier PA and fed to the analogue-to-digital converter AD, in which the electrical analogue data signals are converted into electrical digital data signals. In a second alternative, which is indicated by b) and d), the electrical analogue data signals are tapped after the antenna filter AF and fed to the analogue-to-digital converter AD, in which the electrical analogue data signals are converted into electrical digital data signals.

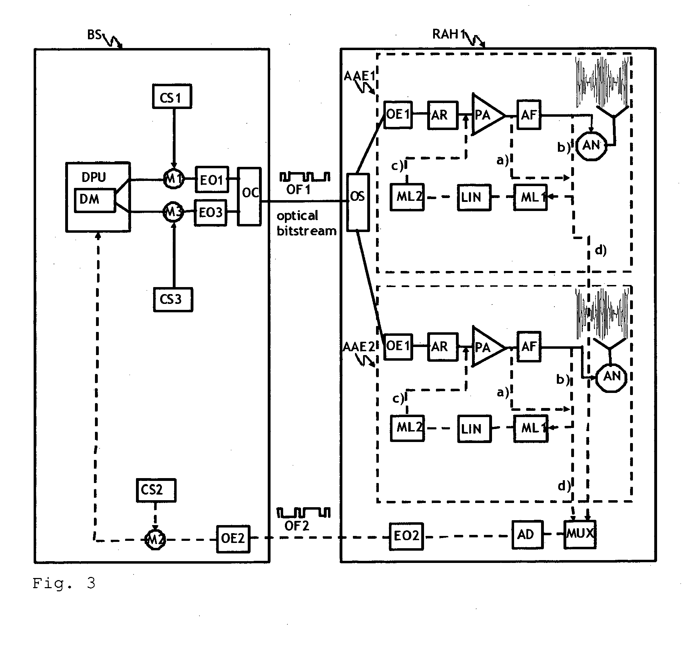

Afterwards the electrical digital data signals are converted into optical digital data signals in the second electro-optical converter E02, and are transmitted via an optical connection OF2, as e.g. an optical fiber or an optical free-space connection to the second opto-electrical converter OE2 located in the transmitting device BS, in which the optical digital data signals are converted back into electrical digital data signals. Then the electrical digital data signals are sent via a reconstruction filter, which is not shown in fig. 3, to the second mixer M2 in which they are downconverted to baseband level by means of electrical analogue radio frequency carrier signals generated in the second carrier synthesizer CS2. Finally, the downconverted electrical analogue data signals are fed to the digital signal processing unit DPU for baseband linearization. The digital signal processing unit DPU in this embodiment additionally comprises an anti-aliasing filter and an analogue-to-digital converter, which are not shown in fig. 3, for filtering and conversion into the digital domain of the downconverted electrical analogue data signals. In a variant of the embodiment, not the tapped electrical analogue data signals are transmitted back to the digital signal processing unit DPU, but merely a control information for baseband linearization which has been calculated in the receiving device RAH1.

In a further variant of the embodiment, the electrical digital data signals are not sent via a reconstruction filter, but directly to the second mixer M2 in which they are downconverted to baseband level by means of electrical digital radio frequency carrier signals generated in the second carrier synthesizer CS2. Finally, the downconverted electrical digital data signals are fed to the digital signal processing unit DPU for baseband linearization.

In another embodiment of the invention, the receiving device RAH1 further comprises two matching lines ML1, ML2, and a linearization device LIN.

The embodiment is based on a linearization on a radio frequency level. In a first alternative, which is indicated by a) and c), the electrical analogue data signals are tapped directly after the analogue radio frequency power amplifier PA and fed to the linearization device LIN via a first suitable interface adaptation, as e.g. the first matching line ML1. Based on the measured deviation of the electrical analogue data signals from the theoretical ideally, i.e. linearly, amplified signal the linearization device LIN derives a compensation signal which is then fed to the input of the analogue radio frequency power amplifier PA again via a second suitable interface adaptation, as e.g. the second matching line ML2, resulting in a linearity-improved overall output signals. The matching lines ML1 and ML2 need to be designed carefully considering frequency and phase characteristics of the signal. Said linearization device LIN can e.g. be a fast differential amplifier with suitable characteristic which is driven by the scaled input and output signal of the analogue radio frequency power amplifier PA. In a second alternative, which is indicated by b) and c), the electrical analogue data signals are tapped after the antenna filter AF and fed to the linearization device LIN via the first suitable interface adaptation, as e.g. the first matching line ML1. As in the first alternative described above, the electrical analogue data signals are conditioned in the linearization device LIN and then fed to the input of the analogue radio frequency power amplifier PA again via a second suitable interface adaptation, as e.g. the second matching line ML2, resulting in a linearity-improved overall output signals.

Fig. 3 schematically shows a transmitting device comprising a digital modulator linked by an optical connection with a receiving device comprising two active antenna elements each comprising an analogue radio frequency power amplifier according to the invention. The principle structure is similar to the one depicted in fig. 2, so that only the differences are described in the following.

Compared to the embodiment depicted in fig. 2, the transmitting device BS depicted in fig. 3 additionally comprises a third mixer M3, a third carrier synthesizer CS3, a third electro-optical converter E03, and an optical combiner OC. Furthermore, compared to the embodiment depicted in fig. 2, the receiving device RAH1 additionally comprises an optical splitter OS, and a second active antenna element AAE2 similar to the first active antenna element AAE1 described above in fig. 2, i.e. a second set of the devices in the downlink chain, as the first opto-electrical converter OE1, the analogue reconstruction device AR, the analogue radio frequency power amplifier PA, the antenna filter AF, and the antenna network AN.

A first output of the digital modulator DM is connected to a first input of the first mixer M1. An output of the first carrier synthesizer CS1 is connected to a second input of the first mixer M1. An output of the first mixer M1 is connected to an input of the first electro-optical converter EO1.

An output of the first electro-optical converter EO1 is connected to a first input of the optical combiner OC.

A second output of the digital modulator DM is connected to a first input of the third mixer M3. An output of the third carrier synthesizer CS3 is connected to a second input of the third mixer M3. An output of the third mixer M3 is connected to an input of the third electro-optical converter E03.

An output of the third electro-optical converter E03 is connected to a second input of the optical combiner OC.

An output of the optical combiner OC is connected to an input of the optical splitter OS through an optical connection OF1, as e.g. an optical fiber or an optical free-space connection.

A first output of the optical splitter OS is connected to the input of the opto-electrical converter OE1 of the first active antenna element AAE1, and a second output of the optical splitter OS is connected to the input of the opto-electrical converter OE1 of the second active antenna element AAE2.

In the digital modulator DM, two sets of electrical data signals e.g. for beamforming or multiple-input-multiple-output, as e.g. so-called I and Q data used e.g. in the standard Third Generation Partnership Project Long Term Evolution (3GPP LTE), that the digital modulator DM receives at its input are digitally modulated resulting in two sets of electrical digital data signals.

The first set of electrical digital data signals is sent to the first input of the first mixer M1. Electrical radio frequency carrier signals, which can be digital or analogue, are generated in the first carrier synthesizer CS1 and sent to the second input of the first mixer M1. The first set of electrical digital data signals is upconverted by means of the electrical digital radio frequency carrier signals in the first mixer M1, and sent to the input of the first electro-optical converter EO1.

In the first electro-optical converter EO1, the first set of electrical digital data signals is converted into optical digital data signals on a first optical carrier wavelength, and transmitted to the first input of the optical combiner OC.

The second set of electrical digital data signals is sent to the first input of the third mixer M3. Electrical radio frequency carrier signals, which can be digital or analogue, are generated in the third carrier synthesizer CS3 and sent to the second input of the third mixer M3. The second set of electrical digital data signals is upconverted by means of the electrical radio frequency carrier signals in the third mixer M3, and sent to the input of the third electro-optical converter EO3.

In the third electro-optical converter E03, the second set of electrical digital data signals is converted into optical digital data signals on a second optical carrier wavelength, and transmitted to the second input of the optical combiner OC.

In an embodiment of the invention, instead of a single digital modulator, two digital modulators are used for processing different user information. The first digital modulator is connected to the first input of the first mixer M1, and the second digital modulator is connected to the first input of the third mixer M3. The further processing of the different user information, which is comprised in the two sets of electrical data signals, is as described above.

The optical digital data signals on the first optical carrier wavelength and the optical digital data signals on the second optical carrier wavelength are transmitted to the input of the optical splitter OS located in the receiving device RAH1 via the optical connection OF1, which can be e.g. an optical fiber or an optical free-space connection. In the optical splitter OS, the optical digital data signals on the first optical carrier wavelength, and the optical digital data signals on the second optical carrier wavelength are separated based on the optical carrier wavelength and transmitted to the input of the opto-electrical converter OE1 of the first active antenna element AAE1 and the second active antenna element AAE2 respectively. The further processing of the two sets of optical digital data signals is as described above in fig. 2.

In an embodiment of the invention, the linearization of the analogue radio frequency power amplifier PA is based on a digitalization of the electrical analogue data signals followed by a conversion to the optical domain as described above in fig. 2 and indicated by a) and d), or b) and d).

The tapped electrical analogue data signals of the first and the second active antenna elements AAE1, AAE2 are fed to a multiplexer MUX in which the electrical analogue data signals of the first and the second active antenna elements AAE1, AAE2 are time-multiplexed. The time-multiplexed electrical analogue data signals are transmitted from the multiplexer MUX to the analogue-to-digital converter AD, in which the electrical analogue data signals are converted into electrical digital data signals. The further processing of the two sets of electrical digital data signals is as described above in fig. 2.

The two active antenna elements AAE1 and AAE2 can be combined with further active antenna elements to an active antenna array.

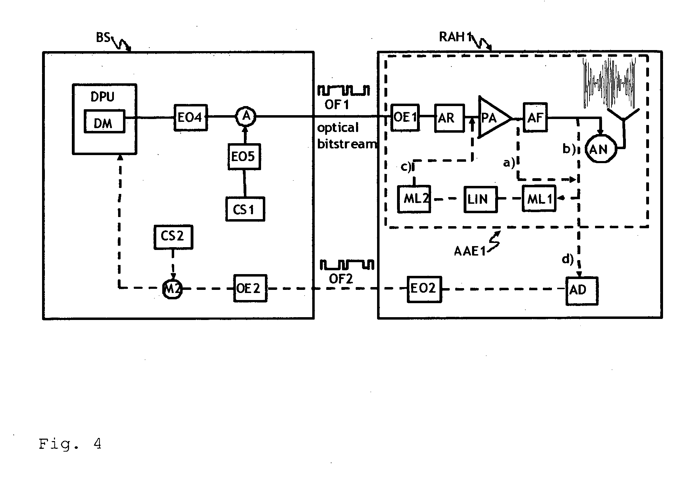

Fig. 4 schematically shows a transmitting device comprising a digital modulator linked by an optical connection with a receiving device comprising an analogue radio frequency power amplifier using optical heterodyning according to the invention. The principle structure is similar to the one depicted in fig. 2, so that only the differences are described in the following.

Compared to the embodiment depicted in fig. 2, the transmitting device BS depicted in fig. 4 comprises an optical adder A, as e.g. an optical combiner, and a fourth and a fifth electro-optical converter E04, EO5 instead of the first mixer M1 and the first electro-optical converter EO1.

An output of the digital modulator DM is connected to a first input of the fourth electro-optical converter E04. An output of the fourth electro-optical converter E04 is connected to a first input of the optical adder A by means of an optical connection. An output of the first carrier synthesizer CS1 is connected to an input of the fifth electro-optical converter EO5. An output of the fifth electro-optical converter EO5 is connected a second input of the optical adder A by means of an optical connection. An output of the optical adder A is connected to an input of the first opto-electrical converter OE1 via the optical connection OF1.

In the digital modulator DM, electrical baseband data signals are digitally modulated e.g. into PWM signals (PWM = Pulse Width Modulation) or into delta sigma modulated signals.

In the following, the invention is described for data signals on a baseband level, however, the invention is also working for data signals on an intermediate frequency f_{if} in an analogue manner.

After modulation, the electrical digital data signals are sent to the fourth electro-optical converter E04 for converting the electrical digital data signals into optical digital data signals using an optical source with f_{optical} being the frequency of the light of the optical source, and f_{data} being the frequency of the electrical digital data signals, so that the optical digital data signals have the frequency fₒₛ= foptical±faata.

From the output of the fourth electro-optical converter E04, the optical digital data signals, as e.g. PWM signals (PWM = Pulse Width Modulation), are sent to the first input of the adder A.

In the first carrier synthesizer CS1, electrical radio frequency carrier signals, which can be digital or analogue, on a radio frequency f_{rf} preferably in the frequency range of several hundreds of MHz to several GHz are generated. The electrical radio frequency carrier signals are sent to the fifth electro-optical converter EO5 for converting the electrical radio frequency carrier signals into optical radio frequency carrier signals using an optical source with f_{optical} being the frequency of the light of the optical source, so that the optical radio frequency carrier signals have a frequency f_{orf}= f_{optical}± f_{rf}.

From the output of the fifth electro-optical converter EO5, the optical radio frequency carrier signals are sent to the second input of the adder A.

Preferably, said electro-optical converters EO4 and EO5 comprise a laser diode which is either directly modulated, or external modulation of light, e.g. by means of an electroabsorption or lithiumniobate modulator is applied. Preferably, the light of only one laser diode is splitted and modulated in the electro-optical converters EO4 and EO5.

In the adder A, the optical digital data signals are added with the optical radio frequency carrier signals, i.e. the optical digital data signals with the frequency fₒₛ= f_{optical}±f_{data} are summed up with the optical radio frequency carrier signals with the frequency f_{orf}= f_{optical}± f_{rf}, which results in combined optical signals.

From the output of the adder A, the combined optical signals, are sent over the optical connection OF1 to an input of the opto-electrical converter OE1.

In the opto-electrical converter OE1, the principle of optical heterodyning is applied, and the optical digital data signals are upconverted into electrical digital data signals. The intensity of the detected electrical digital data signals varies with a frequency f_{des}=f_{rf}+f_{data}, as all higher frequency components of the intensity in the range of f_{optical} are time averaged in the opto-electrical converter OE1. Preferably, said opto-electrical converter OE1 comprises a so-called PIN-diode or a so-called avalanche-photo-diode. The further processing of the electrical digital data signals is as described above in fig. 2.

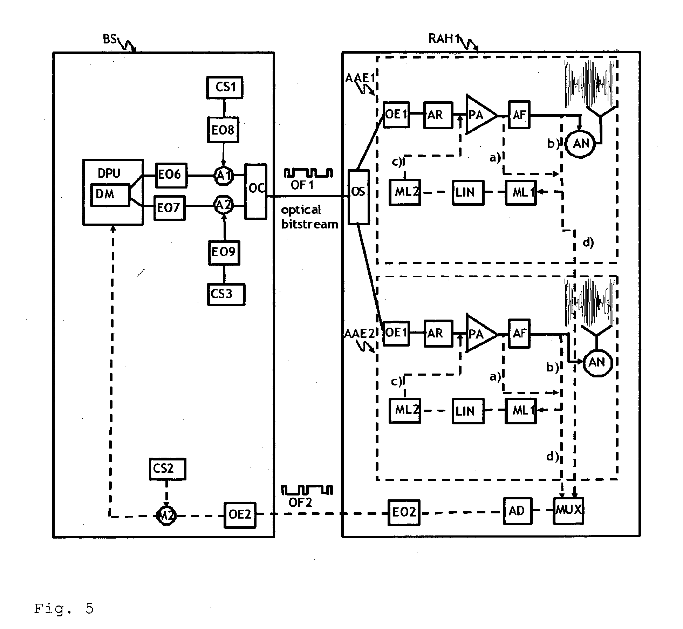

Fig. 5 schematically shows a transmitting device comprising a digital modulator linked by an optical connection with a receiving device comprising two active antenna elements each comprising an analogue radio frequency power amplifier using optical heterodyning according to the invention. The principle structure is similar to the one depicted in fig. 3, so that only the differences are described in the following.

Compared to the embodiment depicted in fig. 3, the transmitting device BS depicted in fig. 3 comprises two optical adders A1 and A2 and four electro-optical converters E06-E09 instead of the first and third mixers M1 and M3 and the first and third electro-optical converters E01 and E03.

A first output of the digital modulator DM is connected to a first input of the sixth electro-optical converter E06. An output of the sixth electro-optical converter E06 is connected to a first input of the first optical adder A1 by means of an optical connection. An output of the first carrier synthesizer CS1 is connected to an input of the eighth electro-optical converter E08. An output of the eighth electro-optical converter E08 is connected a second input of the first optical adder A1 by means of an optical connection. An output of the first optical adder A1 is connected to a first input of the optical combiner OC.

A second output of the digital modulator DM is connected to a first input of the seventh electro-optical converter E07. An output of the seventh electro-optical converter E07 is connected to a first input of the second optical adder A2 by means of an optical connection. An output of the third carrier synthesizer CS3 is connected to an input of the ninth electro-optical converter E09. An output of the ninth electro-optical converter E09 is connected a second input of the second optical adder A2 by means of an optical connection. An output of the second optical adder A2 is connected to a second input of the optical combiner OC.

In the digital modulator DM, two sets of electrical data signals for beamforming or multiple-input-multiple-output, as e.g. so-called I and Q data used e.g. in the standard Third Generation Partnership Project Long Term Evolution (3GPP LTE), that the digital modulator DM receives at its input are digitally modulated resulting in two sets of electrical digital data signals.

The first set of electrical digital data signals is sent to the input of the sixth electro-optical converter E06.

The second set of electrical digital data signals is sent to the input of the seventh electro-optical converter E07.

The processing of each of the two sets of electrical digital data signals is performed applying the principle of optical heterodyning as described above in fig. 4, but with different optical carrier wavelengths for the two sets of electrical digital data signals.

From the optical combiner OC, the combined optical digital signals related to the first set of electrical digital data signals and the combined optical digital signals related to the second set of electrical digital data signals are transmitted together to the input of the optical splitter OS located in the receiving device via the optical connection OF1.

In the optical splitter OS, the combined optical digital signals related to the first set of electrical digital data signals and the combined optical digital signals related to the second set of electrical digital data signals are separated based on the optical carrier wavelength and transmitted to the input of the opto-electrical converter OE1 of the first active antenna element AAE1 and the second active antenna element AAE2 respectively. The further processing of the two sets of optical digital data signals is as described above in fig. 4 applying optical heterodyning.

## Claims

1. A method for transmission of data signals from a transmitting device (BS) to at least one receiving device (RAH1) comprising at least one analogue radio frequency power amplifier (PA) for signal amplification, wherein said data signals are transmitted over at least one optical connection (OF1) from the transmitting device (BS) to the at least one receiving device (RAH1) **wherein**
• electrical data signals are digitally modulated in a digital modulator (DM) located in the transmitting device (BS) resulting in electrical digital data signals,
• the electrical digital data signals are converted into optical digital data signals in at least one electro-optical converter (E04) located in the transmitting device (BS),
• electrical radio frequency carrier signals are converted into optical radio frequency carrier signals in a further electro-optical converter (EO5) in the transmitting device (BS),
• the optical digital data signals are transmitted together with the optical radio frequency carrier signals as combined optical signals to the at least one receiving device (RAH1),
• the optical digital data signals are upconverted into the electrical digital data signals applying optical heterodyning in the at least one opto-electrical converter (OE1) located in the at least one receiving device (RAH1),
• the electrical digital data signals are converted into electrical analogue data signals in at least one analogue reconstruction device (AR) located in the at least one receiving device (RAH1),
• and said electrical analogue data signals are amplified in said at least one analogue radio frequency power amplifier (PA).

2. A method according to claim 1, **characterized in, that** the electrical data signals are modulated in the digital modulator (DM) by means of one of the group of delta sigma modulation, 1 bit analogue to digital conversion and pulse length modulation.

3. A method according to claim 2, **characterized in, that** the at least one analogue reconstruction device (AR) is at least one reconstruction filter.

4. A method according to claim 1, **characterized in, that** the at least one analogue radio frequency power amplifier (PA) is at least one of the group of Class-AB amplifier, Doherty amplifier, and Envelope Tracking amplifier.

5. A method according to claim 1, **characterized in, that** said transmitting device (BS) is a base station and said at least one receiving device (RAH1) is a remote antenna head, and said data signals are transmitted from the base station (BS) via the at least one remote antenna head (RAH1) to a user terminal (UE1).

6. A method according to claim 5, **characterized in, that** data signals from the base station (BS) are transmitted via at least two remote antenna heads (RAH3, RAH4) to a user terminal (UE4) applying beamforming or multiple-input-multiple-output.

7. A method according to claim 1, **characterized in, that** an electrical analogue output signal of the at least one analogue radio frequency power amplifier (PA) is fed back via a linearization device (LIN), in which the electrical analogue output signal is conditioned for linearization on radio frequency level, to the input of the at least one analogue radio frequency power amplifier (PA).

8. A method according to claim 1, **characterized in, that**
• A sample of an electrical analogue output signal of the at least one analogue radio frequency power amplifier (PA) is digitized in an analogue-to-digital converter (AD) and converted into an optical digital output signal in an electro-optical converter (EO2),
• the optical digital output signal is transmitted over an optical connection (OF2) from the at least one receiving device (RAH1) to the transmitting device (BS),
• the optical digital output signal is converted into an electrical digital output signal in an opto-electrical converter (OE2), downconverted into baseband level in a downconverter (M2) and fed to a digital signal processing unit (DPU) for baseband linearization.

9. A transmitting device (BS) for transmission of signals to at least one receiving device (RAH1) **characterized in, that** said transmitting device (BS) comprises
• a digital modulator (DM) that is adapted to digitally modulate electrical data signals resulting in electrical digital data signals,
• a carrier synthesizer (CS1) that is adapted to create electrical radio frequency carrier signals,
• at least one electro-optical converter (EO4, EO5) that is adapted to convert the electrical digital data signals into optical digital data signals, and the electrical radio frequency carrier signals into optical radio frequency carrier signals,
• and at least one optical connection (OF1) for transmission of said optical digital data signals and said optical radio frequency carrier signals.

10. A transmitting device (BS) according to claim 9, **characterized in, that** the transmitting device (BS) is a base station used for a communication network (CN) applying the standard Universal Mobile Telecommunications System, Third Generation Partnership Project Long Term Evolution, Third Generation Partnership Project Long Term Evolution Advanced, or Worldwide Interoperability for Microwave Access.

11. A receiving device (RAH1) for reception of signals sent from a transmitting device (BS) **characterized in, that** said receiving device (RAH1) comprises
• an optical input that is adapted to receive optical digital data signals and optical radio frequency carrier signals as combined optical signals,
• at least one opto-electrical converter (OE1) that is adapted to upconvert the optical digital data signals into electrical digital data signals applying optical heterodyning,
• at least one analogue reconstruction device (AR) that is adapted to convert the electrical digital signals into electrical analogue signals,
• and at least one analogue radio frequency power amplifier (PA) that is adapted to amplify said electrical analogue signals.

12. A receiving device (RAH1) according to claim 11, **characterized in, that** said receiving device (RAH1) is a remote antenna head for reception of signals sent from a base station (BS) and used for a communication network (CN) applying the standard Universal Mobile Telecommunications System, Third Generation Partnership Project Long Term Evolution, Third Generation Partnership Project Long Term Evolution Advanced, or Worldwide Interoperability for Microwave Access.

13. A communication network (CN) comprising at least one base station (BS) according to claim 10 and at least one remote antenna head (RAH1) according to claim 12 for transmission of signals from said at least one base station (BS) via said at least one remote antenna head (RAH1) to a user terminal (UE1).

## Patentansprüche

1. Verfahren zur Übertragung von Datensignalen von einer Sendevorrichtung (BS) an mindestens eine Empfangsvorrichtung (RAH1) mit mindestens einem analogen Funkfrequenz-Leistungsverstärker (PA) zur Signalverstärkung, wobei die besagten Datensignale über mindestens eine optische Verbindung (OF1) von der Sendevorrichtung (BS) an die mindestens eine Empfangsvorrichtung (RAH1) übertragen werden, wobei
• elektrische Datensignals in einem in der Sendevorrichtung (BS) angeordneten digitalen Modulator (DM) digital moduliert werden, wodurch digitale elektrische Datensignale entstehen,
• die digitalen elektrischen Datensignale in mindestens einem in der Sendevorrichtung (BS) angeordneten elektro-optischen Wandler (E04) in digitale optische Datensignale umgewandelt werden,
• elektrische Funkfrequenzträgersignale in einem weiteren elektro-optischen Wandler (EO5) in der Sendevorrichtung (BS) in optische Funkfrequenzträgersignale umgewandelt werden,
• die digitalen optischen Datensignale zusammen mit den optischen Funkfrequenzträgersignalen als kombinierte optische Signale an die mindestens eine Empfangsvorrichtung (RAH1) übertragen werden,
• die digitalen optischen Datensignale durch Anwenden einer optischen Überlagerung in dem mindesten einen in der mindestens einen Empfangsvorrichtung (RAH1) angeordneten opto-elektrischen Wandler (OE1) in die digitalen elektrischen Datensignale aufwärts umgewandelt werden,
• die digitalen elektrischen Datensignale in mindestens einer in der mindestens einen Empfangsvorrichtung (RAH1) angeordneten analogen Rekonstruktionsvorrichtung (AR) in analoge elektrische Datensignale umgewandelt werden,
• und die besagten analogen elektrischen Datensignal in dem besagten mindestens einen analogen Funkfrequenz-Leistungsverstärker (PA) verstärkt werden.

2. Verfahren nach Anspruch 1, **dadurch gekennzeichnet, dass** die elektrischen Datensignale in dem digitalen Modulator (DM) anhand einer der Gruppe bestehend aus Delta-Sigma-Modulation, 1-Bit-Analog-zu-Digital-Umwandlung und Pulslängenmodulation moduliert werden.

3. Verfahren nach Anspruch 2, **dadurch gekennzeichnet, dass** die mindestens eine analoge Rekonstruktionsvorrichtung (AR) mindestens ein Rekonstruktionsfilter ist.

4. Verfahren nach Anspruch 1, **dadurch gekennzeichnet, dass** der mindestens eine analoge Funkfrequenz-Leistungsverstärker (PA) mindestens einer der Gruppe bestehend aus Klasse-AB-Verstärker, Doherty-Verstärker und Hüllkurvenverfolgungs-Verstärker ist.

5. Verfahren nach Anspruch 1, **dadurch gekennzeichnet, dass** die besagte Sendevorrichtung (BS) eine Basisstation ist und die besagte mindestens eine Empfangsvorrichtung (RAH1) ein entfernt angeordneter Antennenkopf ist, und dass die besagten Datensignale über den mindestens einen entfernt angeordneten Antennenkopf (RAH1) von der Basisstation (BS) an ein Benutzerendgerät (UE1) übertragen werden.

6. Verfahren nach Anspruch 5, **dadurch gekennzeichnet, dass** Datensignale von der Basisstation (BS) über mindestens zwei entfernt angeordnete Antennenköpfe (RAH3, RAH4) an ein Benutzerendgerät (UE4) unter Anwendung von Beamforming- oder Mehrfach-Eingang und Mehrfach-Ausgang-Verfahrens übertragen werden.

7. Verfahren nach Anspruch 1, **dadurch gekennzeichnet**, das ein analoges elektrisches Ausgangssignal des mindestens einen analogen Funkfrequenz-Leistungsverstärkers (PA) über eine Linearisierungsvorrichtung (LIN), in welcher das analoge elektrische Ausgangssignal für die Linearisierung auf Funkfrequenzebene konditioniert wird, an den Eingang des mindestens einen analogen Funkfrequenz-Leistungsverstärkers (PA) rückgekoppelt wird.

8. Verfahren nach Anspruch 1, **dadurch gekennzeichnet, dass**
• ein Abtastwert eines analogen elektrischen Ausgangssignals des mindestens einen analogen Funkfrequenz-Leistungsverstärkers (PA) in einem Analog-zu-Digital-Wandler (AD) digitalisiert und in einem elektro-optischen Wandler (E02) in ein digitales optisches Ausgangssignal umgewandelt wird,
• das digitale optische Ausgangssignal über eine optische Verbindung (OF2) von der mindestens einen Empfangsvorrichtung (RAH1) an die Sendevorrichtung (BS) übertragen wird,
• das digitale optische Ausgangssignal in einem opto-elektrischen Wandler (OE2) in ein digitales elektrisches Ausgangssignal umgewandelt, in einem Abwärtswandler (M2) in die Basisbandebene abwärts umgewandelt (M2) und zur Basisband-Linearisierung in eine digitale Signalverarbeitungseinheit (DPU) eingespeist wird.

9. Sendevorrichtung (BS) für die Übertragung von Signalen an mindestens eine Empfangsvorrichtung (RAH1), **dadurch gekennzeichnet, dass** die besagte Sendevorrichtung (BS) umfasst:
• einen digitalen Modulator (DM), welcher dazu ausgelegt ist, elektrische Datensignale digital zu modulieren, wodurch digitale elektrische Datensignale entstehen,
• einen Trägersynthesizer (CS1), welcher dazu ausgelegt ist, elektrische Funkfrequenzträgersignale zu erzeugen,
• mindestens einen elektro-optischen Wandler (E04, EO5), welcher dazu ausgelegt ist, die digitalen elektrischen Datensignale in digitale optische Signale und die elektrischen Funkfrequenzträgersignale in optische Funkfrequenzträgersignale umzuwandeln,
• und mindestens eine optische Verbindung (OF1) für die Übertragung der besagten digitalen optischen Datensignale und der besagten optischen Funkfrequenzträgersignale.

10. Sendevorrichtung (BS) nach Anspruch 9, **dadurch gekennzeichnet, dass** die Sendevorrichtung (BS) eine Basisstation ist, die für ein Kommunikationsnetzwerk (CN) verwendet wird, welches das standardmäßige Universal Mobile Telecommunications System, Third Generation Partnership Project Long Term Evolution, Third Generation Partnership Project Long Term Evolution Advanced oder Worldwide Interoperability for Microwave Access anwendet.

11. Empfangsvorrichtung (RAH1) für den Empfang von von einer Sendevorrichtung (BS) gesendeten Signalen, dadurch gekennzeichet, dass die besagte Empfangsvorrichtung (RAH1) umfasst:
• Einen optischen Eingang, welcher für den Empfang von digitalen optischen Datensignalen und optischen Funkfrequenzträgersignalen als kombinierte optische Signale ausgelegt ist,
• mindestens einen opto-elektrischen Wandler (OE1), welcher für das Aufwärtsumwandeln der digitalen optischen Datensignale in digitale elektrische Datensignale unter Verwendung einer optischen Überlagerung ausgelegt ist,
• mindestens eine analoge Rekonstruktionsvorrichtung (AR), welche für das Umwandeln der digitalen elektrischen Signale in analoge elektrische Signale ausgelegt ist,
• und mindestens einen analogen Funkfrequenz-Leistungsverstärker (PA), welcher für das Verstärken der besagten analogen elektrischen Signale ausgelegt ist.

12. Empfangsvorrichtung (RAH1) nach Anspruch 11, **dadurch gekennzeichnet, dass** die besagte Empfangsvorrichtung (RAH1) ein entfernt angeordneter Antennenkopf für den Empfang von von einer Basisstation (BS) gesendeten Signalen ist und für ein Kommunikationsnetzwerk (CN), welches das standardmäßige Universal Mobile Telecommunications System, Third Generation Partnership Project Long Term Evolution, Third Generation Partnership Project Long Term Evolution Advanced oder Worldwide Interoperability for Microwave Access anwendet, verwendet wird.

13. Kommunikationsnetzwerk (CN) mit mindestens einer Basisstation (BS) gemäß Anspruch 10 und mindestens einem entfernt angeordneten Antennenkopf (RAH1) gemäß Anspruch 12 für die Übertragung von Signalen von der besagten mindestens einen Basisstation (BS) über den besagten mindestens einen entfernt angeordneten Antennenkopf (RAH1) an ein Benutzerendgerät (UE1).

## Revendications

1. Procédé de transmission de signaux de données à partir d'un dispositif de transmission (BS) vers au moins un dispositif de réception (RAH1) comprenant au moins un amplificateur de puissance (PA) radiofréquence analogique pour l'amplification de signaux, dans lequel lesdits signaux de données sont transmis sur au moins une connexion optique (OF1) à partir du dispositif de transmission (BS) vers l'au moins un dispositif de réception (RAH1) dans lequel
• des signaux de données électriques sont modulés numériquement dans un modulateur numérique (DM) placé dans le dispositif de transmission (BS) produisant des signaux de données numériques électriques,
• les signaux de données numériques électriques sont convertis en signaux de données numériques optiques dans au moins un convertisseur électro-optique (EO4) placé dans le dispositif de transmission (BS),
• des signaux porteurs de radiofréquence électriques sont convertis en signaux porteurs de radiofréquence optiques dans un autre convertisseur électro-optique (EO5) dans le dispositif de transmission (BS),
• les signaux de données numériques optiques sont transmis conjointement avec les signaux porteurs de radiofréquence optiques sous la forme de signaux optiques combinés vers l'au moins un dispositif de réception (RAH1),
• les signaux de données numériques optiques subissent une conversion ascendante pour devenir les signaux de données numériques électriques en appliquant un hétérodynage optique dans l'au moins un convertisseur opto-électrique (OE1) placé dans l'au moins un dispositif de réception (RAH1),
• les signaux de données numériques électriques sont convertis en signaux de données analogiques électriques dans au moins un dispositif de reconstruction analogique (AR) placé dans l'au moins un dispositif de réception (RAH1),
• et lesdits signaux de données analogiques électriques sont amplifiés dans ledit au moins un amplificateur de puissance (PA) radiofréquence analogique.

2. Procédé selon la revendication 1, **caractérisé en ce que** les signaux de données électriques sont modulés dans le modulateur numérique (DM) au moyen d'une méthode dans le groupe constitué de la modulation delta-sigma, de la conversion analogique/numérique 1 bit et de la modulation d'impulsions en durée.

3. Procédé selon la revendication 2, **caractérisé en ce que** l'au moins un dispositif de reconstruction analogique (AR) est au moins un filtre de reconstruction.

4. Procédé selon la revendication 1, **caractérisé en ce que** l'au moins un amplificateur de puissance (PA) radiofréquence analogique est au moins un amplificateur dans le groupe constitué d'un amplificateur de classé AB, d'un amplificateur de Doherty et d'un amplificateur de suivi d'enveloppe.

5. Procédé selon la revendication 1, **caractérisé en ce que** ledit dispositif de transmission (BS) est une station de base et ledit au moins un dispositif de réception (RAH1) est une tête d'antenne distante et lesdits signaux de données sont transmis à partir de la station de base (BS) à un terminal utilisateur (UE1) par l'intermédiaire de l'au moins une tête d'antenne distante (RAH1).

6. Procédé selon la revendication 5, **caractérisé en ce que** les signaux de données provenant de la station de base (BS) sont transmis à un terminal d'utilisateur (UE4) par l'intermédiaire d'au moins deux têtes d'antenne distantes (RAH3, RAH4) en appliquant la formation de faisceau ou l'entrée multiple - sortie multiple.

7. Procédé selon la revendication 1, **caractérisé en ce qu'**un signal de sortie électrique analogique de l'au moins un amplificateur de puissance (PA) radiofréquence analogique est renvoyé par l'intermédiaire d'un dispositif de linéarisation (LIN), dans lequel le signal de sortie électrique analogique est conditionné pour une linéarisation au niveau de la radiofréquence, vers l'entrée de l'au moins un amplificateur de puissance (PA) radiofréquence analogique.

8. Procédé selon la revendication 1, **caractérisé en ce que**
• un échantillon d'un signal de sortie électrique analogique de l'au moins un amplificateur de puissance (PA) radiofréquence analogique est numérisé dans un convertisseur analogique/numérique (AD) puis converti en un signal de sortie numérique optique dans un convertisseur électro-optique (EO2),
• le signal de sortie numérique optique est transmis sur une connexion optique (OF2) à partir de l'au moins un dispositif de réception (RAH1) vers le dispositif de transmission (BS),
• le signal de sortie numérique optique est converti en un signal de sortie numérique électrique dans un convertisseur opto-électrique (OE2), subit une conversion descendante au niveau de la bande de base dans un convertisseur descendant (M2), puis est acheminé vers une unité de traitement de signal numérique (DPU) pour sa linéarisation en bande de base.

9. Dispositif de transmission (BS) pour la transmission de signaux vers au moins un dispositif de réception (RAH1) **caractérisé en ce que** ledit dispositif de transmission (BS) comprend
• un modulateur numérique (DM) qui est adapté pour moduler numériquement des signaux de données électriques produisant des signaux de données numériques électriques,
• un synthétiseur de porteuse (CS1) qui est adapté pour créer des signaux porteurs de radiofréquence électriques,
• au moins un convertisseur électro-optique (EO4, EO5) qui est adapté pour convertir les signaux de données numériques électriques en signaux de données numériques optiques, et les signaux porteurs de radiofréquence électriques en signaux porteurs de radiofréquence optiques,
• et au moins une connexion optique (OF1) pour la transmission desdits signaux de données numériques optiques et desdits signaux porteurs de radiofréquence optiques.

10. Dispositif de transmission (BS) selon la revendication 9, **caractérisé en ce que** le dispositif de transmission (BS) est une station de base utilisée pour un réseau de communication (CN) appliquant le système universel de télécommunications mobiles, l'évolution à long terme du projet de partenariat de troisième génération, l'évolution à long terme du projet de partenariat de troisième génération avancé ou l'interopérabilité mondiale pour l'accès micro-ondes standard.

11. Dispositif de réception (RAH1) pour la réception de signaux envoyés à partir d'un dispositif de transmission (BS) **caractérisé en ce que** ledit dispositif de réception (RAH1) comprend
• une entrée optique qui est adaptée pour recevoir des signaux de données numériques optiques et des signaux porteurs de radiofréquence optiques sous la forme de signaux optiques combinés,
• au moins un convertisseur opto-électrique (OE1) qui est adapté pour appliquer une conversion ascendante aux signaux de données numériques optiques afin qu'ils deviennent des signaux de données numériques électriques en appliquant un hétérodynage optique,
• au moins un dispositif de reconstruction analogique (AR) qui est adapté pour convertir les signaux numériques électriques en signaux analogiques électriques,
• et au moins un amplificateur de puissance (PA) radiofréquence analogique qui est adapté pour amplifier lesdits signaux analogiques électriques.

12. Dispositif de réception (RAH1) selon la revendication 11, **caractérisé en ce que** ledit dispositif de réception (RAH1) est une tête d'antenne distante pour la réception de signaux envoyés à partir d'une station de base (BS) et utilisés pour un réseau de communication (CN) appliquant le système universel de télécommunications mobiles, l'évolution à long terme du projet de partenariat de troisième génération, l'évolution à long terme du projet de partenariat de troisième génération avancé ou l'interopérabilité mondiale pour l'accès micro-ondes standard.

13. Réseau de communication (CN) comprenant au moins une station de base (BS) selon la revendication 10 et au moins une tête d'antenne distante (RAH1) selon la revendication 12 pour la transmission de signaux à partir de ladite au moins une station de base (BS) à un terminal utilisateur (UE1) par l'intermédiaire de ladite au moins une tête d'antenne distante (RAH1).
